# EUROPEAN PATENT APPLICATION

(11) **EP 2 315 372 A1**
(43) Date of publication of application: **27.04.2011**
(21) Application number: 11154585.1
(22) Date of filing: 14.11.2008
(51) Int. Cl.: H04B 7/26

(54) **Methods and apparatus for providing an efficient frame structure for wireless communication systems**

(30) Priority: 20.11.2007 US 989385 P; 28.10.2008 US 260077
(62) Divisional of application: 08851764.4
(71) Applicant: Qualcomm Incorporated, San Diego, CA 92121-1714 (US)
(72) Inventor: Dayal, Pranav, San Diego, CA 92121-1714 (US); Naguib, Ayman Fawzy, San Diego, CA 92121-1714 (US); Makhijani, Mahesh, San Diego, CA 92121-171 4 (US)
(74) Representative: Catesby, Olivia Joanne

(57) **Abstract**

Providing for an efficient frame structure for wireless communication is disclosed, which may include frequency division multiplexing (FDM) first and second air interfaces in a downlink subframe of a frame, and may also include time division multiplexing (TDM) the first and second air interfaces in an uplink subframe of the frame.

## Description

### PRIORITY CLAIM

This application claims the benefit of priority from U.S. Provisional Patent Application Serial No. 60/989,385, filed November 20, 2007 and entitled "Frame Structure Supporting Multiple Air Interfaces for Wireless Channel," which is fully incorporated herein by reference for all purposes.

### TECHNICAL FIELD

The present disclosure relates generally to communication systems. More specifically, the present disclosure relates to methods and apparatus for providing an efficient frame structure for wireless communication systems.

### BRIEF DESCRIPTION OF THE DRAWINGS

Figure 1 illustrations a wireless communication system with multiple base stations (BS) and multiple subscriber stations (SS);

Figure 2 illustrates an example multi-cell layout;

Figure 3 illustrates an example frame structure for a time division duplex (TDD) mode in IEEE 802.16e;

Figure 4 illustrates an example transmission timeline for three sectors with frequency reuse of 3;

Figure 5 illustrates a design of a frame structure that supports two air interfaces;

Figure 6 illustrates an example transmission timeline for three sectors which support both IEEE 802.16e and 802.16m with the frame structure shown in Figure 5;

Figure 7 illustrates a design of a frame structure that supports femtocells and macrocells;

Figure 8 illustrates a design of a method for communication;

Figure 9 illustrates a design of an apparatus for communication;

Figure 10 illustrates a design of a method performed by a base station for communication;

Figure 11 illustrates a design of an apparatus for communication;

Figure 12 illustrates a design of a method performed by a subscriber station for communication;

Figure 13 illustrates a design of an apparatus for communication;

Figure 14 illustrates a design of a method for supporting communication for macrocells and femtocells;

Figure 15 illustrates a design of an apparatus for communication; and

Figure 16 illustrates a block diagram of a design of a base station and a subscriber station.

### SUMMARY

An apparatus for providing an efficient frame structure for wireless communication is disclosed. The apparatus may include at least one processor configured to frequency division multiplex (FDM) first and second air interfaces in a downlink subframe of a frame, and to time division multiplex (TDM) the first and second air interfaces in an uplink subframe of the frame. The apparatus may also include a memory coupled to the at least one processor.

A method for providing an efficient frame structure for wireless communication is disclosed. The method may include frequency division multiplexing (FDM) first and second air interfaces in a downlink subframe of a frame. The method may also include time division multiplexing (TDM) the first and second air interfaces in an uplink subframe of the frame.

An apparatus for providing an efficient frame structure for wireless communication is disclosed. The apparatus may include means for frequency division multiplexing (FDM) first and second air interfaces in a downlink subframe of a frame. The apparatus may also include means for time division multiplexing (TDM) the first and second air interfaces in an uplink subframe of the frame.

A computer-program product comprising a computer-readable medium having instructions thereon is disclosed. The instructions may include code for causing at least one computer to frequency division multiplex (FDM) first and second air interfaces in a downlink subframe of a frame. The instructions may also include code for causing the at least one computer to time division multiplex (TDM) the first and second air interfaces in an uplink subframe of the frame.

An apparatus for providing an efficient frame structure for wireless communication is disclosed. The apparatus may include at least one processor configured to send a first downlink transmission on a first frequency band in a downlink subframe, and to receive a first uplink transmission on the first frequency band in a first time interval of an uplink subframe. The first downlink transmission and the first uplink transmission may utilize a first air interface. The first air interface may be frequency division multiplexed (FDM) with a second air interface on the downlink and time division multiplexed (TDM) with the second air interface on the uplink. The apparatus may also include a memory coupled to the at least one processor.

A method for providing an efficient frame structure for wireless communication is disclosed. The method may include sending a first downlink transmission on a first frequency band in a downlink subframe. The method may also include receiving a first uplink transmission on the first frequency band in a first time interval of an uplink subframe. The first downlink transmission and the first uplink transmission may utilize a first air interface. The first air interface may be frequency division multiplexed (FDM) with a second air interface on the downlink and time division multiplexed (TDM) with the second air interface on the uplink.

An apparatus for providing an efficient frame structure for wireless communication is disclosed. The apparatus may include means for sending a first downlink transmission on a first frequency band in a downlink subframe. The apparatus may also include means for receiving a first uplink transmission on the first frequency band in a first time interval of an uplink subframe. The first downlink transmission and the first uplink transmission may utilize a first air interface. The first air interface may be frequency division multiplexed (FDM) with a second air interface on the downlink and time division multiplexed (TDM) with the second air interface on the uplink.

A computer-program product comprising a computer-readable medium having instructions thereon is disclosed. The instructions may include code for causing at least one computer to send a first downlink transmission on a first frequency band in a downlink subframe. The instructions may also include code for causing the at least one computer to receive a first uplink transmission on the first frequency band in a first time interval of an uplink subframe. The first downlink transmission and the first uplink transmission may utilize a first air interface. The first air interface may be frequency division multiplexed (FDM) with a second air interface on the downlink and time division multiplexed (TDM) with the second air interface on the uplink.

An apparatus for providing an efficient frame structure for wireless communication is disclosed. The apparatus may include at least one processor configured to receive a downlink transmission on a first frequency band in a downlink subframe, and to send an uplink transmission on the first frequency band in a first time interval of an uplink subframe. The downlink transmission and the uplink transmission may utilize a first air interface. The first air interface may be frequency division multiplexed (FDM) with a second air interface on the downlink and time division multiplexed (TDM) with the second air interface on the uplink. The apparatus may also include a memory coupled to the at least one processor.

A method for providing an efficient frame structure for wireless communication is disclosed. The method may include receiving a downlink transmission on a first frequency band in a downlink subframe. The method may also include sending an uplink transmission on the first frequency band in a first time interval of an uplink subframe. The downlink transmission and the uplink transmission may utilize a first air interface. The first air interface may be frequency division multiplexed (FDM) with a second air interface on the downlink and time division multiplexed (TDM) with the second air interface on the uplink.

An apparatus for providing an efficient frame structure for wireless communication is disclosed. The apparatus may include means for receiving a downlink transmission on a first frequency band in a downlink subframe. The apparatus may also include means for sending an uplink transmission on the first frequency band in a first time interval of an uplink subframe. The downlink transmission and the uplink transmission may utilize a first air interface. The first air interface may be frequency division multiplexed (FDM) with a second air interface on the downlink and time division multiplexed (TDM) with the second air interface on the uplink.

A computer-program product comprising a computer-readable medium having instructions thereon is disclosed. The instructions may include code for causing at least one computer to receive a downlink transmission on a first frequency band in a downlink subframe. The instructions may also include code for causing the at least one computer to send an uplink transmission on the first frequency band in a first time interval of an uplink subframe. The downlink transmission and the uplink transmission may utilize a first air interface. The first air interface may be frequency division multiplexed (FDM) with a second air interface on the downlink and time division multiplexed (TDM) with the second air interface on the uplink.

An apparatus for providing an efficient frame structure for wireless communication is disclosed. The apparatus may include at least one processor configured to send a downlink transmission for a first cell that is frequency division multiplexed (FDM) with a second cell in a downlink subframe of a frame, and to receive an uplink transmission for the first cell that is time division multiplexed (TDM) with the second cell in an uplink subframe of the frame. The apparatus may also include a memory coupled to the at least one processor.

A method for providing an efficient frame structure for wireless communication is disclosed. The method may include sending a downlink transmission for a first cell that is frequency division multiplexed (FDM) with a second cell in a downlink subframe of a frame. The method may also include receiving an uplink transmission for the first cell that is time division multiplexed (TDM) with the second cell in an uplink subframe of the frame.

An apparatus for providing an efficient frame structure for wireless communication is disclosed. The apparatus may include means for sending a downlink transmission for a first cell that is frequency division multiplexed (FDM) with a second cell in a downlink subframe of a frame. The apparatus may also include means for receiving an uplink transmission for the first cell that is time division multiplexed (TDM) with the second cell in an uplink subframe of the frame.

A computer-program product comprising a computer-readable medium having instructions thereon is disclosed. The instructions may include code for causing at least one computer to send a downlink transmission for a first cell that is frequency division multiplexed (FDM) with a second cell in a downlink subframe of a frame. The instructions may also include code for causing the at least one computer to receive an uplink transmission for the first cell that is time division multiplexed (TDM) with the second cell in an uplink subframe of the frame.

### DETAILED DESCRIPTION

As used herein, the term "subscriber station" refers to an electronic device that may be used for voice and/or data communication over a wireless communication network. Examples of subscriber stations include cellular phones, personal digital assistants (PDAs), handheld devices, wireless modems, laptop computers, personal computers, etc. A subscriber station may alternatively be referred to as an access terminal, a mobile terminal, a mobile station, a remote station, a user terminal, a terminal, a subscriber unit, user equipment, etc.

A wireless communication network may provide communication for a number of subscriber stations, each of which may be serviced by a base station. A base station may alternatively be referred to as an access point, a Node B, or some other terminology.

A subscriber station may communicate with one or more base stations via transmissions on the uplink and the downlink. The uplink (or reverse link) refers to the communication link from the subscriber station to the base station, and the downlink (or forward link) refers to the communication link from the base station to the subscriber station.

The resources of a wireless communication network (e.g., bandwidth and transmit power) may be shared among multiple subscriber stations. A variety of multiple access techniques are known, including code division multiple access (CDMA), time division multiple access (TDMA), frequency division multiple access (FDMA), and orthogonal frequency division multiple access (OFDMA).

The frame structure and transmission techniques described herein may be used for various communication systems such as Code Division Multiple Access (CDMA) systems, Time Division Multiple Access (TDMA) systems, Frequency Division Multiple Access (FDMA) systems, Orthogonal FDMA (OFDMA) systems, Single-Carrier FDMA (SC-FDMA) systems, Spatial Division Multiple Access (SDMA) systems, multiple-input multiple-output (MIMO) systems, etc. An OFDMA system utilizes orthogonal frequency division multiplexing (OFDM). An SC-FDMA system utilizes single-carrier frequency division multiplexing (SC-FDM). OFDM and SC-FDM partition the system bandwidth into multiple orthogonal subcarriers, which are also referred to as tones, bins, etc. Each subcarrier may be modulated with data. In general, modulation symbols are sent in the frequency domain with OFDM and in the time domain with SC-FDM. An OFDMA system may implement an air interface such as Ultra Mobile Broadband (UMB), Evolved UTRA (E-UTRA), IEEE 802.11 (which is also referred to as Wi-Fi), IEEE 802.16 (which is also referred to as WiMAX), IEEE 802.20, Flash-OFDM^{®}, etc. These various air interfaces and standards are known in the art. An air interface is a mechanism for supporting radio communication between two stations. The terms "air interface", "radio technology", and "radio access technology" are often used interchangeably. Also, the terms "system" and "network" are often used interchangeably.

For clarity, certain aspects of the present disclosure are described below for WiMAX, which is described in IEEE 802.16, entitled "Part 16: Air Interface for Fixed and Mobile Broadband Wireless Access Systems," October 1, 2004, and IEEE 802.16e, entitled "Part 16: Air Interface for Fixed and Mobile Broadband Wireless Access Systems; Amendment 2: Physical and Medium Access Control Layers for Combined Fixed and Mobile Operation in Licensed Bands," February 28, 2006. These documents are publicly available. Aspects of the present disclosure may also be used for IEEE 802.16m, which is a new air interface being developed for WiMAX.

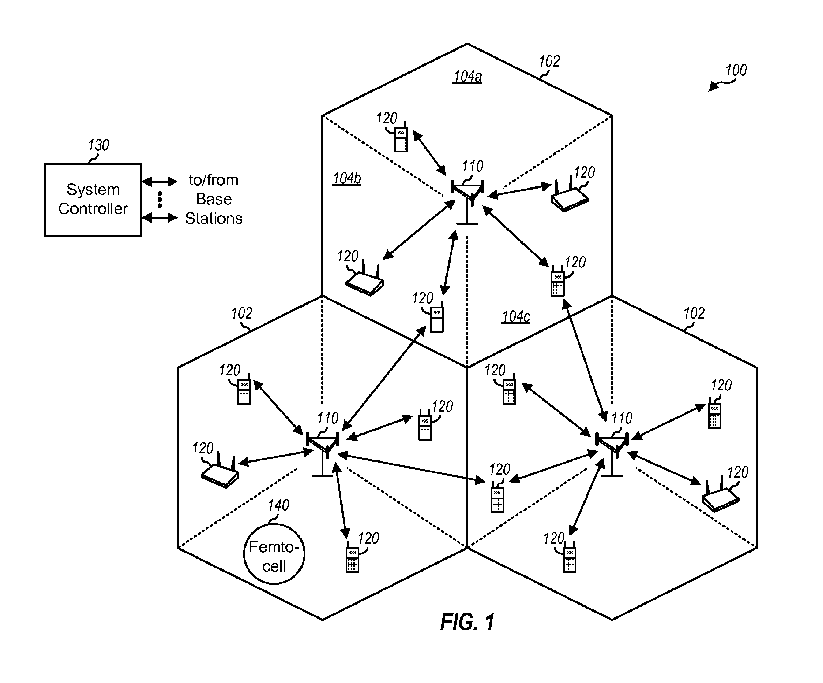

Figure 1 shows a wireless communication system 100 with multiple base stations (BS) 110 and multiple subscriber stations (SS) 120. A base station 110 is a station that communicates with the subscriber stations 120. A base station 110 may also be called, and may contain some or all of the functionality of, an access point, a Node B, an evolved Node B, etc. Each base station 110 provides communication coverage for a particular geographic area 102. The term "cell" can refer to a base station 110 and/or its coverage area 102 depending on the context in which the term is used. To improve system capacity, a base station coverage area 102 may be partitioned into multiple smaller areas, e.g., three smaller areas 104a, 104b and 104c. Each smaller area 104a, 104b and 104c may be served by a respective base station subsystem. The term "sector" can refer to the smallest coverage area 104a, 104b and 104c of a base station 110 and/or the base station subsystem serving this coverage area 102.

Subscriber stations 120 may be dispersed throughout the system 100, and each subscriber station 120 may be stationary or mobile. A subscriber station 120 may also be called, and may contain some or all of the functionality of, a mobile station (MS), a terminal, an access terminal, a user equipment, a subscriber unit, a station, etc. A subscriber station 120 may be a cellular phone, a personal digital assistant (PDA), a wireless device, a wireless modem, a handheld device, a laptop computer, a cordless phone, etc. A subscriber station 120 may communicate with zero, one, or multiple base stations 110 on the downlink (DL) and/or uplink (UL) at any given moment. The downlink (or forward link) refers to the communication link from the base stations 110 to the subscriber stations 120, and the uplink (or reverse link) refers to the communication link from the subscriber stations 120 to the base stations 110.

For a centralized architecture, a system controller 130 may couple to the base stations 110 and provide coordination and control for these base stations 110. The system controller 130 may be a single network entity or a collection of network entities. For a distributed architecture, the base stations 110 may communicate with one another as needed.

The wireless system 100 may have many cells, and each cell may include three sectors 104a, 104b and 104c. Data transmissions for subscriber stations 120 in the same sector 104 may be sent using orthogonal multiplexing to avoid or minimize intrasector interference. However, data transmissions for subscriber stations 120 in different sectors 104 may not be orthogonalized, in which case each subscriber station 120 may observe inter-sector interference from subscriber stations 120 in other sectors 104. The inter-sector interference may significantly degrade performance for disadvantaged subscriber stations 120 observing high levels of interference. The wireless system 100 may employ frequency reuse of greater than one in order to combat inter-sector interference.

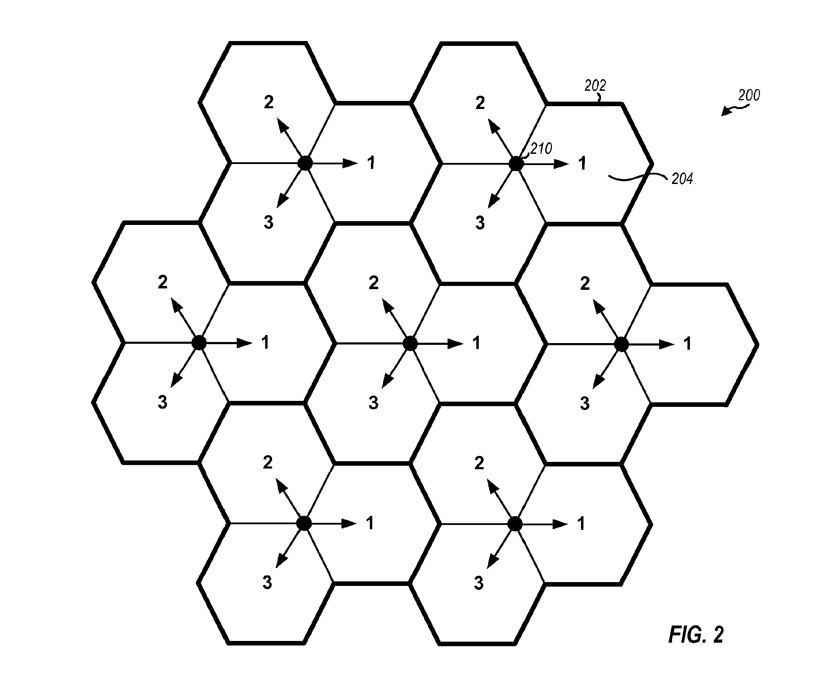

Figure 2 shows an example multi-cell layout 200. For simplicity, each sector 204 is modeled by an ideal hexagon that approximates the coverage boundary of that sector 204. Each 3-sector cell 202 is modeled by a clover of three ideal hexagons, with the base station 210 being located at the center of the clover. The three sectors 204 of each cell 202 are labeled as sector 1, sector 2, and sector 3.

The system 200 may employ frequency reuse of three. In this case, the overall system bandwidth may be divided into three frequency channels called F1, F2 and F3. Each sector 204 of a cell 202 may be assigned a different one of the three frequency bands. For example, sector 1 may use frequency channel F1, sector 2 may use frequency channel F2, and sector 3 may use frequency channel F3. For the cell layout shown in Figure 2, each sector 204 is surrounded in the first tier (or the first ring) by six adjacent sectors 204 that use different frequency channels than that sector 204. An adjacent sector 204 is a sector 204 that is immediately adjacent to and shares coverage boundary with another sector 204. Thus, each sector 1 using frequency channel F1 is surrounded by six adjacent sectors 2 and 3 using frequency channels F2 and F3 in the first tier. Each sector 2 using frequency channel F2 is surrounded by six adjacent sectors 1 and 3 using frequency channels F1 and F3. Each sector 3 using frequency channel F3 is surrounded by six adjacent sectors 1 and 2 using frequency channels F1 and F2.

As shown in Figure 2, with frequency reuse of 3, the same frequency channel is reused by sectors 204 that are not adjacent to one another, and the inter-sector interference observed in each sector 204 is reduced relative to the case in which all sectors 204 use the same frequency channel. However, a frequency reuse factor greater than one may result in under-utilization of the available system resources since each sector 204 is able to use only a fraction of the overall system bandwidth.

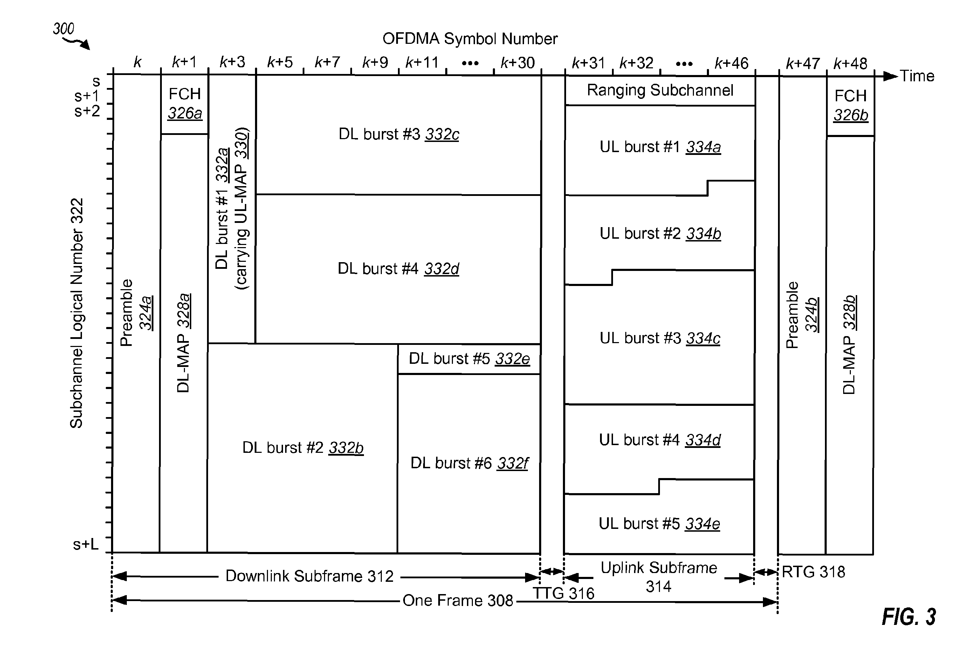

Figure 3 shows an example frame structure 300 for a time division duplex (TDD) mode in IEEE 802.16e. The transmission timeline may be partitioned into units of frames 308. Each frame 308 may span a predetermined time duration, e.g., 5 milliseconds (ms), and may be partitioned into a downlink subframe 312 and an uplink subframe 314. The downlink and uplink subframes 312, 314 may be separated by a transmit transmission gap (TTG) 316 and a receive transmission gap (RTG) 318.

A number of physical subchannels may be defined. Each physical subchannel may include a group of subcarriers that may be contiguous or distributed across the system bandwidth. A number of logical subchannels 322 may also be defined and may be mapped to the physical subchannels based on a known mapping. The logical subchannels 322 may simplify the allocation of resources.

As shown in Figure 3, a downlink subframe 312 may include a preamble 324a, a frame control header (FCH) 326a, a downlink map (DL-MAP) 328a, an uplink map (UL-MAP) 330, and downlink (DL) bursts 332a-f. The preamble 324a may carry a known transmission that may be used by subscriber stations for frame detection and synchronization. The FCH 326a may carry parameters used to receive the DL-MAP 328a, the UL-MAP 330, and the downlink bursts 332a-f. The DL-MAP 328a may carry a DL-MAP message, which may include information elements (IEs) for various types of control information for downlink access. The UL-MAP 330 may carry an UL-MAP message, which may include IEs for various types of control information for uplink access. The downlink bursts 332a-f may carry traffic data for the subscriber stations being served. An uplink subframe 314 may include uplink bursts 334a-e, which may carry traffic data from the subscriber stations being served.

In general, the downlink and uplink subframes 312, 314 may cover any fraction of a frame 308. In one design, a frame 308 spans 47 OFDM symbols, the downlink subframe 312 covers 31 OFDM symbols, and the uplink subframe 314 covers 16 OFDM symbols. The frame 308, downlink subframe 312, and uplink subframe 314 may also have other durations, which may be fixed or configurable.

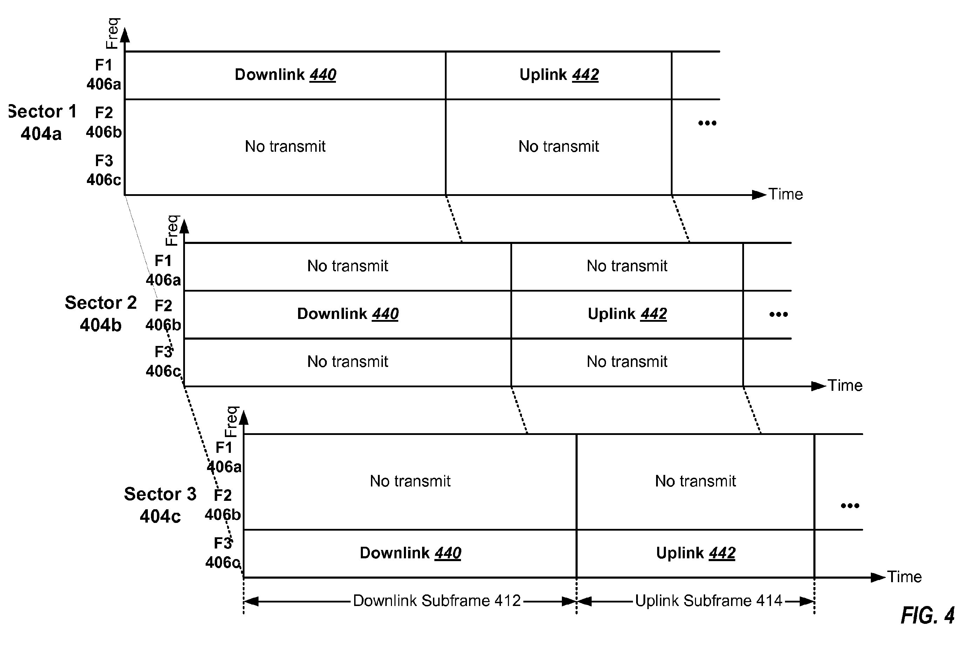

Figure 4 shows an example transmission timeline for three sectors 404 (i.e., sector 1 404a, sector 2 404b, and sector 3 404c) with frequency reuse of three. In this example, sector 1 404a operates on frequency channel F1 406a. Downlink transmissions 440 are sent on frequency channel F1 406a in the downlink subframe 412, and uplink transmissions 442 are sent on frequency channel F1 406a in the uplink subframe 414. No transmissions are sent on frequency channels F2 406b and F3 406c for the downlink or uplink in sector 1 404a. Sector 2 404b operates on frequency channel F2 406b. Downlink transmissions 440 are sent on frequency channel F2 406b in the downlink subframe 412, and uplink transmissions 442 are sent on frequency channel F2 406b in the uplink subframe 414. No transmissions are sent on frequency channels F1 406a and F3 406c for the downlink or uplink in sector 2 404b. Sector 3 404c operates on frequency channel F3 406c, downlink transmissions 440 are sent on frequency channel F3 406c in the downlink subframe 412, and uplink transmissions 442 are sent on frequency channel F3 406c in the uplink subframe 414. No transmissions are sent on frequency channels F1 406a and F2 406b for the downlink or uplink in sector 3 404c.

As shown in Figure 4, the downlink transmissions 440 from sector 1 404a, sector 2 404b, and sector 3 404c are sent on three different non-overlapping frequency channels F1 406a, F2 406b and F3 406c and thus do not interfere with one another. The uplink transmissions 442 in sector 1 404a, sector 2 404b, and sector 3 404c are also sent on three different frequency channels F1 406a, F2 406b and F3 406c and do not interfere with one another. Therefore, a frequency reuse of 3 may thus prevent or reduce inter-sector interference. However, as shown in Figure 4, each sector 404 only operates on one-third of the overall system bandwidth.

IEEE 802.16m is a new air interface that is being developed and targeted for International Mobile Telecommunications (IMT)-Advanced, which is the next generation beyond IMT-2000. IEEE 802.16m is being designed to be backward compatible with IEEE 802.16e. Furthermore, IEEE 802.16m should interoperate with IEEE 802.16e and should not degrade the performance of IEEE 802.16e. IEEE 802.16e utilizes OFDMA for the downlink and uplink. IEEE 802.16m may utilize any multiplexing scheme (e.g., OFDMA, SC-FDMA, CDMA, TDMA or FDMA) or any combination of multiplexing schemes (e.g., OFDMA and CDMA) for each of the downlink and uplink.

In accordance with the present disclosure, a new air interface (e.g., IEEE 802.16m) and an old/legacy air interface (e.g., IEEE 802.16e) may be concurrently supported using a frame structure that takes advantage of the better performance of the new air interface when possible while minimally impacting the performance of the old air interface. For this frame structure, the new and old air interfaces may be frequency division multiplexed (FDM) for the downlink and may be time division multiplexed (TDM) for the uplink.

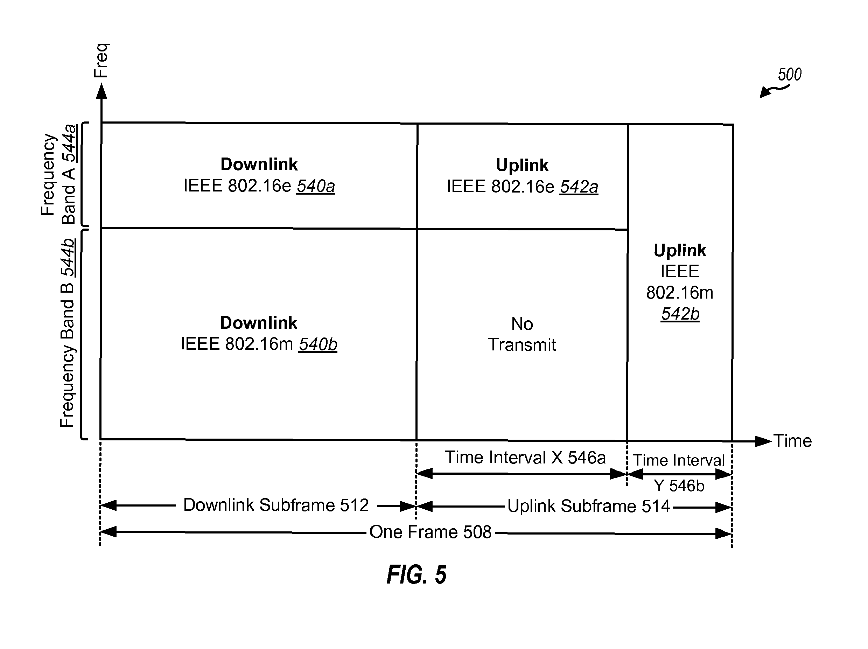

Figure 5 shows a design of a frame structure 500 that supports two air interfaces, e.g., IEEE 802.16e and 802.16m. The system bandwidth may be partitioned into two frequency bands 544, shown as frequency band A 544a and frequency band B 544b. A frequency band 544 may also be referred to as a frequency segment, a frequency range, a frequency channel, etc. A frame 508 may also be partitioned into a downlink subframe 512 and an uplink subframe 514. The uplink subframe 514 may be further partitioned into two time intervals 546, shown as time interval X 546a and time interval Y 546b. A time interval 546 may also be referred to as a time slot, a slot, etc.

For the downlink, frequency band A 544a may be used for IEEE 802.16e transmissions 540a and frequency band B 544b may be used for IEEE 802.16m transmissions 540b during the downlink subframe 512. IEEE 802.16e and 802.16m are thus frequency division multiplexed on two frequency bands A 544a and B 544b, respectively, during the downlink subframe 512.

For the uplink, frequency band A 544a may be used for IEEE 802.16e transmissions 542a and frequency band B 544b may be unused during time interval X 546a of the uplink subframe 514. Both frequency bands A 544a and B 544b may be used for IEEE 802.16m transmissions 542b during time interval Y 546b of the uplink subframe 514. IEEE 802.16e and 802.16m are thus time division multiplexed in two time intervals X 546a and Y 546b, respectively, during the uplink subframe 514.

Figure 5 shows a specific design of mapping IEEE 802.16e and 802.16m to frequency bands 544 and time intervals 546. In another design, time interval X 546a may be used for IEEE 802.16m, and time interval Y 546b may be used for IEEE 802.16e. This design results in uplink transmissions from IEEE 802.16e subscriber stations occurring near the end of the frame 508, which would be similar to a pure IEEE 802.16e system. IEEE 802.16e and 802.16m may also be mapped to time and frequency based on other designs.

In general, frequency bands A 544a and B 544b may each cover any fraction of the system bandwidth. In one design that supports IEEE 802.16e with frequency reuse of 3, a system bandwidth of 30 MHz is partitioned such that frequency band A 544a covers 10 MHz and frequency band B 544b covers 20 MHz. In another design that supports IEEE 802.16e with frequency reuse of 3, a system bandwidth of 15 MHz is partitioned such that frequency band A 544a covers 5 MHz and frequency band B 544b covers 10 MHz. In another design that supports IEEE 802.16e with frequency reuse of 2, a system bandwidth of 20 MHz is partitioned such that frequency band A 544a covers 10 MHz and frequency band B 544b covers 10 MHz. Frequency bands A 544a and B 544b may also cover other fractions of the system bandwidth and may support other frequency reuse factors.

In general, the downlink and uplink subframes 512, 514 may cover any fraction of a frame 508. In one design, a frame 508 spans 47 OFDM symbols, the downlink subframe 512 covers 26 OFDM symbols, the uplink subframe 514 covers 21 OFDM symbols, time interval X 546a of the uplink subframe 514 covers 16 OFDM symbols, and time interval Y 546b of the uplink subframe 514 covers 5 OFDM symbols. This design may result in the uplink for IEEE 802.16e having approximately the same time/frequency allocation as the example design described above for Figure 3. Hence, the link budget on the uplink for IEEE 802.16e may not be affected by the use of the frame structure 500. The frame 508, the downlink subframe 512, the uplink subframe 514, and the X and Y time intervals 546a, 546b may also have other durations. These durations may be static values that do not change, semi-static values that change slowly, or dynamic values that may change dynamically (e.g., based on loading on the downlink and uplink).

A typical deployment scenario for IEEE 802.16e may be with a system bandwidth of 30 MHz and frequency reuse of 3. On the downlink, computer simulations show that the performance of IEEE 802.16e may be satisfactory and reasonable sector throughput may be achieved for both frequency reuse of 1 and frequency reuse of 3. On the uplink, computer simulations show that the performance of IEEE 802.16e may be poor with frequency reuse of 1 since there is no interference management.

The frame structure 500 shown in Figure 5 exploits the above findings to improve utilization of the available system bandwidth while maintaining good performance for IEEE 802.16e. For the downlink, when a sector is using only 10 MHz of the 30 MHz system bandwidth for IEEE 802.16e with frequency reuse of 3, the remaining 20 MHz of the system bandwidth may be used for IEEE 802.16m. From the perspective of IEEE 802.16e, the sector may observe interference comparable to that of a system with frequency reuse of 1 and may still be able to achieve good performance for IEEE 802.16e for the downlink. However, sector throughput and bandwidth utilization may both be improved for the downlink by using the remaining 20 MHz for IEEE 802.16m.

On the uplink, IEEE 802.16e and 802.16m may be multiplexed in the time domain so that frequency reuse of 3 can be achieved for IEEE 802.16e during time interval X 546a of the uplink subframe 514. This may then preserve the performance of IEEE 802.16e. IEEE 802.16m may be designed to provide satisfactory performance with frequency reuse of 1. Hence, the entire 30 MHz system bandwidth may be used for IEEE 802.16m during time interval Y 546b of the uplink subframe 514.

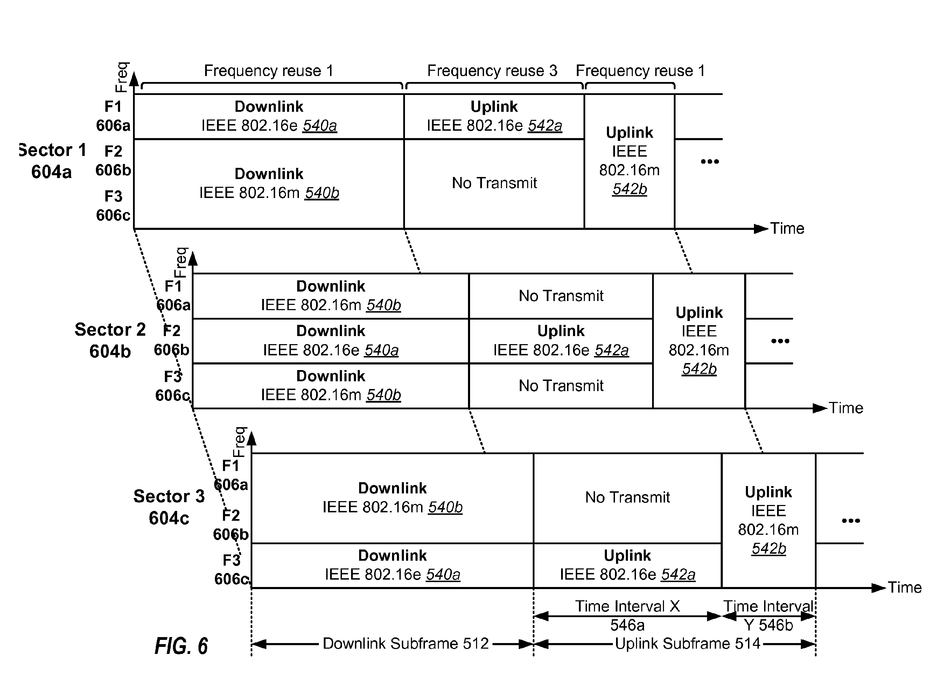

Figure 6 shows an example transmission timeline for three sectors 604 (i.e., sector 1 604a, sector 2 604b, and sector 3 604c) which support both IEEE 802.16e and 802.16m with the frame structure 500 shown in Figure 5. In this example, sector 1 604a operates on frequency channel F1 606a for IEEE 802.16e. Downlink transmissions 540a for IEEE 802.16e are sent on frequency channel F1 606a in the downlink subframe 512, and uplink transmissions 542a for IEEE 802.16e are sent on frequency channel F1 606a in time interval X 546a of the uplink subframe 514. Downlink transmissions 540b for IEEE 802.16m are sent on frequency channels F2 606b and F3 606c in the downlink subframe 512, and uplink transmissions 542b for IEEE 802.16m are sent on all three frequency channels F1 606a, F2 606b, and F3 606c in time interval Y 546b of the uplink subframe 514. No transmissions are sent on frequency channels F2 606b and F3 606c in time interval X 546a of the uplink subframe 514.

Sector 2 604b operates on frequency channel F2 606b for IEEE 802.16e. Downlink transmissions 540a for IEEE 802.16e are sent on frequency channel F2 606b in the downlink subframe 512, and uplink transmissions 542a for IEEE 802.16e are sent on frequency channel F2 606b in time interval X 546a of the uplink subframe 514. Downlink transmissions 540b for IEEE 802.16m are sent on frequency channels F1 606a and F3 606c in the downlink subframe 512, and uplink transmissions 542b for IEEE 802.16m are sent on all three frequency channels F1 606a, F2 606b and F3 606c in time interval Y 546b of the uplink subframe 514. No transmissions are sent on frequency channels F1 606a and F3 606c in time interval X 546a of the uplink subframe 514.

Sector 3 604c operates on frequency channel F3 606c for IEEE 802.16e. Downlink transmissions 540a for IEEE 802.16e are sent on frequency channel F3 606c in the downlink subframe 512, and uplink transmissions 542a for IEEE 802.16e are sent on frequency channel F3 606c in time interval X 546a of the uplink subframe 514. Downlink transmissions 540b for IEEE 802.16m are sent on frequency channels F1 606a and F2 606b in the downlink subframe 512, and uplink transmissions 542b for IEEE 802.16m are sent on all three frequency channels F1 606a, F2 606b, and F3 606c in time interval Y 546b of the uplink subframe 514. No transmissions are sent on frequency channels F1 606a and F2 606b in time interval X 546a of the uplink subframe 514.

As shown in Figure 6, the downlink transmissions 640 from each sector 604 are sent on all three frequency channels F1 606a, F2 606b, and F3 606c to improve sector throughput and bandwidth utilization. The performance of the downlink for IEEE 802.16e may be acceptable with frequency reuse of 1. However, the uplink transmissions 542a for IEEE 802.16e in sector 1 604a, sector 2 604b, and sector 3 604c are sent on three different frequency channels F1 606a, F2 606b, and F3 606c and do not interfere with one another. A frequency reuse of 3 may ensure acceptable performance for the uplink for IEEE 802.16e. The uplink transmissions 542b for IEEE 802.16m in each sector 604 are sent on all three frequency channels F1 606a, F2 606b, and F3 606c to improve sector throughput and bandwidth utilization.

In the design shown in Figure 6, frequency reuse of 3 is employed for time interval X 546a of the uplink subframe 514. In another design, fractional reuse may be employed for time interval X 546a. For example, sector 1 604a may allow uplink transmissions 542b for IEEE 802.16m from subscriber stations that are unlikely to cause excessive interference to adjacent sectors 2 604b and 3 604c.

Figure 6 shows a design in which the frame structure 500 of Figure 5 is used for a frequency reuse of 3. In general, the frame structure 500 of Figure 5 may be used for any frequency reuse factor greater than one (e.g., 2, 3, etc.).

The designs shown in Figures 5 and 6 may provide various advantages. First, the uplink performance of IEEE 802.16e may be preserved by maintaining frequency reuse of 3 to avoid or minimize interference. Second, the downlink performance of IEEE 802.16e may still be satisfactory with frequency reuse of 1. Third, improved sector throughput may be realized by supporting IEEE 802.16m with frequency reuse of 1.

Referring briefly to Figure 1, the cells 102 shown in Figure 1 may be referred to as macrocells 102. A macrocell 102 is a cell having a relatively large coverage area, e.g., on the order of several kilometers radius. A wireless communication system 100 may also support femtocells 140, which may be small isolated coverage areas within macrocells 102. A femtocell 140 is a cell having a relatively small coverage area. For example, a femtocell 140 may correspond to a deployment of IEEE 802.16e and/or 802.16m within a home, an office, a shop, etc. In general, femtocells 140 may be located anywhere within macrocells 102. One femtocell 140 is shown in Figure 1 for illustration.

In accordance with another aspect of the present disclosure, femtocells 140 may be supported using the frame structure 500 shown in Figure 5. In particular, the downlink for the femtocells 140 and macrocells 102 may be frequency division multiplexed, whereas the uplink for the femtocells 140 and macrocells 102 may be time division multiplexed.

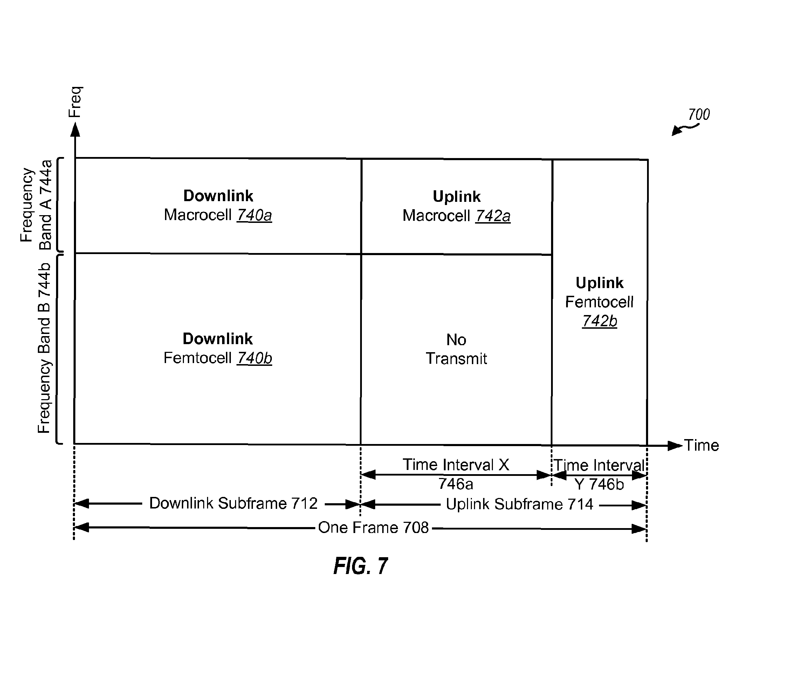

Reference is now made to Figure 7. Figure 7 shows a design of a frame structure 700 that supports femtocells and macrocells. The system bandwidth may be partitioned into two frequency bands 744, shown as frequency band A 744a and frequency band B 744b. A frame 708 may also be partitioned into a downlink subframe 712 and an uplink subframe 714. The uplink subframe 714 may be further partitioned into two time intervals 746, shown as time interval X 746 and time interval Y 746b.

For the downlink, frequency band A 744a may be used for macrocell transmissions 740a and frequency band B 744b may be used for femtocell transmissions 740b during the downlink subframe 712. The macrocell and the femtocell are thus frequency division multiplexed on frequency bands A 744a and B 744b, respectively, on the downlink. For the uplink, frequency band A 744a may be used for macrocell transmissions 742a during time interval X 746a of the uplink subframe 714. Both frequency bands A 744a and B 744b may be used for femtocell transmissions 742b during time interval Y 746b of the uplink subframe 714. The macrocell and the femtocell are thus time division multiplexed in time intervals X 746a and Y 746b, respectively, on the uplink.

Frequency reuse of one may be used for the downlink for the macrocell and the femtocell. However, subscriber stations served by the macrocell may experience frequency reuse of one on the downlink only when they are within the coverage area of some (and not necessary all) femtocells and may experience frequency reuse greater than one outside of the femtocell coverage. Frequency reuse greater than one (e.g., three) may be used for the uplink for the macrocell, and frequency reuse of one may be used for the uplink for the femtocell.

In general, the macrocell and the femtocell may utilize the same or different air interfaces, and each cell may utilize any suitable air interface. In one design, the macrocell may utilize IEEE 802.16e and the femtocell may utilize IEEE 802.16m. For example, IEEE 802.16m may be used mainly to provide femtocell service when IEEE 802.16e already exists. In this design, the frame structure 700 shown in Figure 7 would match the frame structure 500 shown in Figure 5. IEEE 802.16e subscriber stations outside the coverage of the femtocell would not see a reduction of frequency reuse factor from 3 to 1 on the downlink. This design may minimally impact handover performance for IEEE 802.16e subscriber stations outside the coverage of the femtocell. Furthermore, there may be a soft degradation for 802.16e subscriber stations within the coverage of the femtocell.

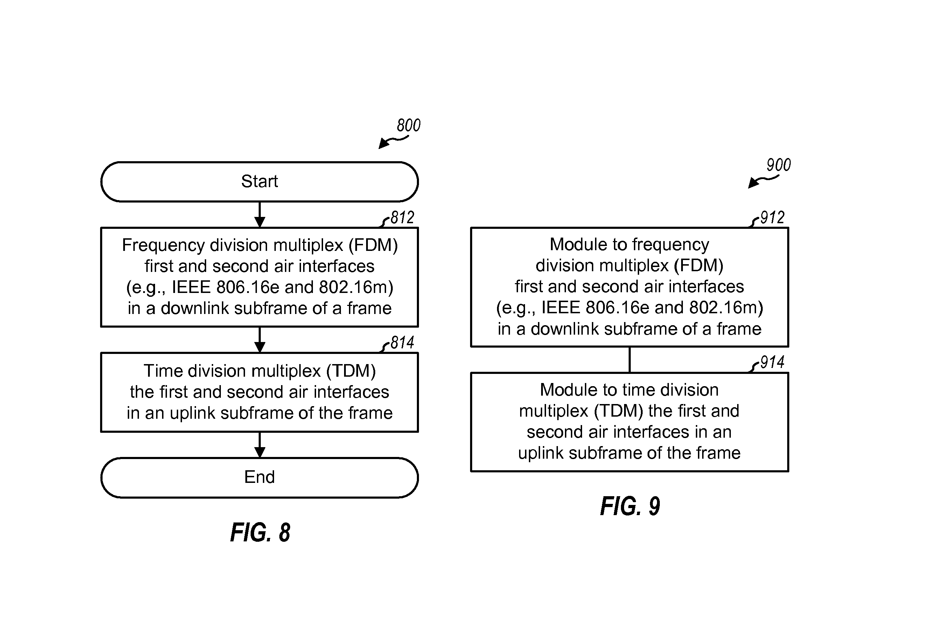

Figure 8 shows a design of a method 800 for communication in accordance with the present disclosure. First and second air interfaces may be frequency division multiplexed (FDM) 812 (e.g., on first and second frequency bands, respectively) in a downlink subframe of a frame. The first and second air interfaces may be time division multiplexed (TDM) 814 (e.g., in first and second time intervals, respectively) of an uplink subframe of the frame.

In one design, the first air interface may be IEEE 802.16e, and the second air interface may be an IEEE 802.16 standard later than IEEE 802.16e (e.g., IEEE 802.16m). The first and second air interfaces may also be other air interfaces.

In one design, only the first frequency band 544a may be utilized for the first air interface during the first time interval (e.g., time interval X 546a) of the uplink subframe 514. Both the first frequency band 544a and the second frequency band 544b may be utilized for the second air interface during the second time interval (e.g., time interval Y 546b) of the uplink subframe 514.

The first frequency band 544a may correspond to frequency channel F1 606a for sector 1 604a, frequency channel F2 606b for sector 2 604b, or frequency channel F3 606c for sector 3 604c in Figure 6. The second frequency band 544b may be contiguous and may cover frequency channels F2 606b and F3 606b for sector 1 604a or frequency channels F1 606a and F2 606b for sector 3 604c in Figure 6. The second frequency band 544b may also be non-contiguous and may cover frequency channels F1 606a and F3 606c for sector 2 604b in Figure 6.

In one design, frequency reuse of one may be utilized for the downlink for the first and second air interfaces, frequency reuse greater than one (e.g., three) may be utilized for the uplink for the first air interface, and frequency reuse of one may be utilized for the uplink for the second air interface.

The method 800 of Figure 8 described above may be performed by various hardware and/or software component(s) and/or module(s) corresponding to the means-plus-function blocks 900 illustrated in Figure 9. In other words, blocks 812 through 814 illustrated in Figure 8 correspond to means-plus-function blocks 912 through 914 illustrated in Figure 9.

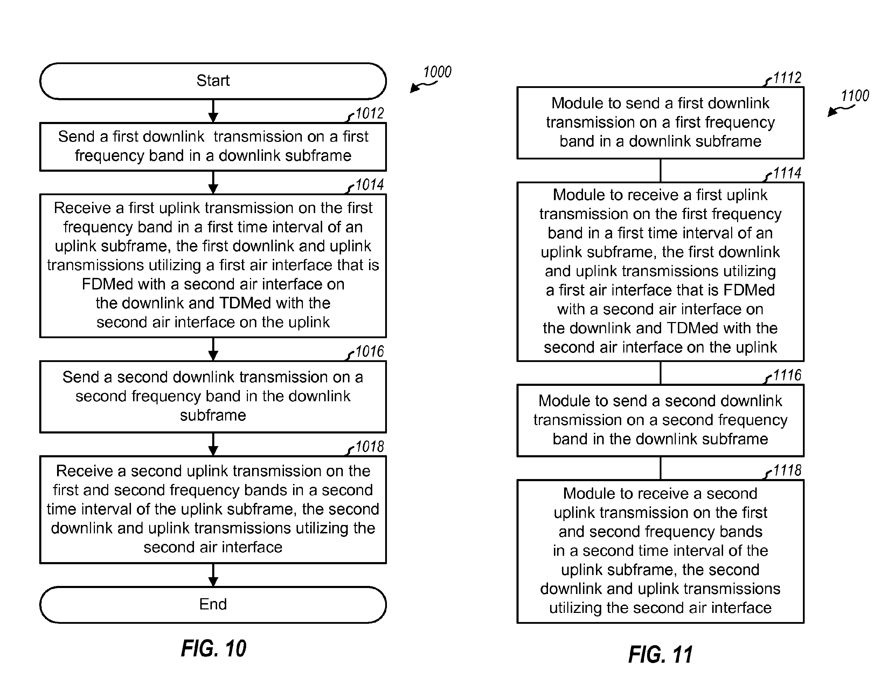

Figure 10 shows a design of a method 1000 performed by a base station for communication in accordance with the present disclosure. A first downlink transmission may be sent 1012 on a first frequency band in a downlink subframe of a frame. A first uplink transmission may be received 1014 on the first frequency band in a first time interval of an uplink subframe of the frame. The first downlink transmission and the first uplink transmission may utilize a first air interface (e.g., IEEE 802.16e). The first air interface may be frequency division multiplexed with a second air interface (e.g., IEEE 802.16m) on the downlink and may be time division multiplexed with the second air interface on the uplink. A second downlink transmission may be sent 1016 on a second frequency band in the downlink subframe. A second uplink transmission may be received 1018 on the first and second frequency bands in a second time interval of the uplink subframe. The second downlink transmission and the second uplink transmission may utilize the second air interface.

In one design, frequency reuse of 1 may be used for the downlink for the first and second air interfaces. The first frequency band may be used by at least one adjacent sector for downlink transmission based on the second air interface during the downlink subframe. The second frequency band may be used by at least one adjacent sector for downlink transmission based on the first air interface during the downlink subframe. In one design, frequency reuse greater than one (e.g., three) may be used for the uplink for the first air interface. No adjacent sector may use the first frequency band for uplink transmission during the first time interval of the uplink subframe. In one design, frequency reuse of one may be used for the uplink for the second air interface. At least one adjacent sector may use the first and second frequency bands for uplink transmission based on the second air interface during the second time interval of the uplink subframe.

The method 1000 of Figure 10 described above may be performed by various hardware and/or software component(s) and/or module(s) corresponding to the means-plus-function blocks 1100 illustrated in Figure 11. In other words, blocks 1012 through 1018 illustrated in Figure 10 correspond to means-plus-function blocks 1112 through 1118 illustrated in Figure 11.

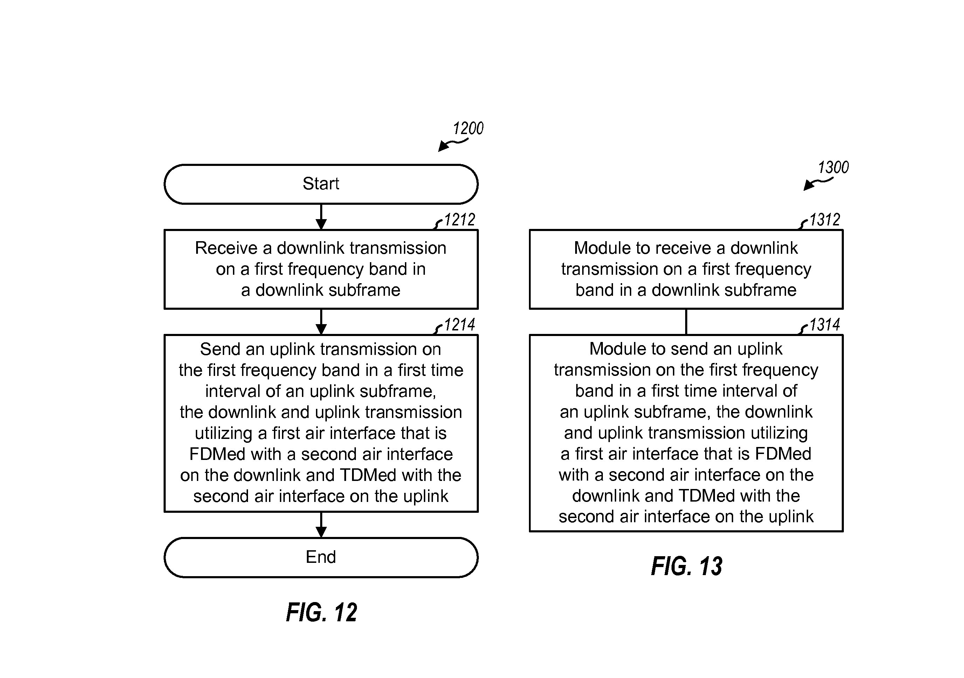

Figure 12 shows a design of a method 1200 performed by a subscriber station for communication in accordance with the present disclosure. A downlink transmission may be received 1212 on a first frequency band in a downlink subframe of a frame. An uplink transmission may be sent 1214 on the first frequency band in a first time interval of an uplink subframe of the frame. The downlink transmission and the uplink transmission may utilize a first air interface. The first air interface may be frequency division multiplexed with a second air interface on the downlink, and may be time division multiplexed with the second air interface on the uplink.

In one design, the first air interface may be IEEE 802.16e, and the second air interface may be IEEE 802.16m. In another design, the first air interface may be IEEE 802.16m, and the second air interface may be IEEE 802.16e.

The method 1200 of Figure 12 described above may be performed by various hardware and/or software component(s) and/or module(s) corresponding to the means-plus-function blocks 1300 illustrated in Figure 13. In other words, blocks 1212 through 1214 illustrated in Figure 12 correspond to means-plus-function blocks 1312 through 1314 illustrated in Figure 13.

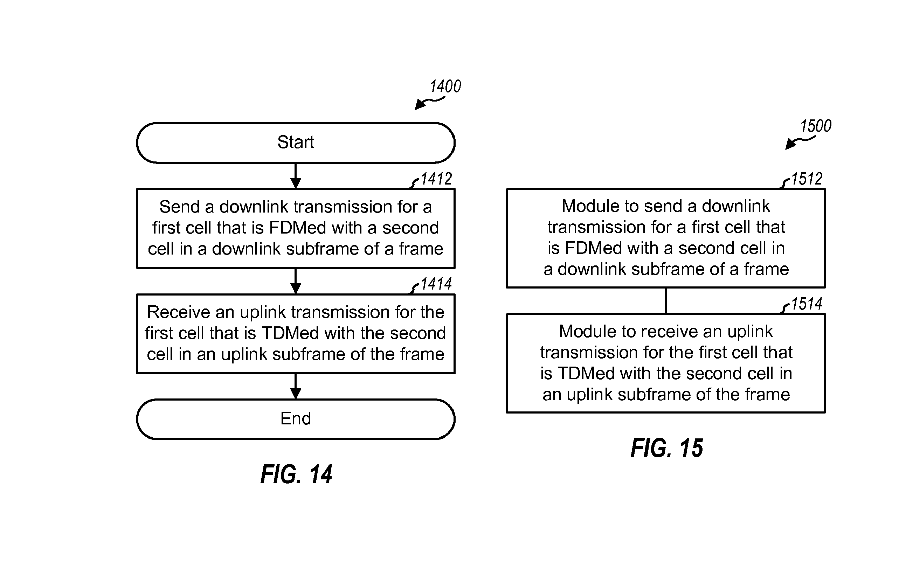

Figure 14 shows a design of a method 1400 for supporting communication for macrocells and femtocells in accordance with the present disclosure. A downlink transmission may be sent 1412 for a first cell that is frequency division multiplexed with a second cell in a downlink subframe of a frame. An uplink transmission may be received 1414 for the first cell that is time division multiplexed with the second cell in an uplink subframe of the frame. The first and second cells may be frequency division multiplexed on first and second frequency bands, respectively, during the downlink subframe. The first and second cells may be time division multiplexed in first and second time intervals, respectively, of the uplink subframe. The first cell may utilize only the first frequency band during the first time interval of the uplink subframe. The second cell may utilize the first and second frequency bands during the second time interval of the uplink subframe. The first cell may be a macrocell, and the second cell may be a femtocell. Alternatively, the first cell may be a femtocell, and the second cell may be a macrocell.

The method 1400 of Figure 14 described above may be performed by various hardware and/or software component(s) and/or module(s) corresponding to the means-plus-function blocks 1500 illustrated in Figure 15. In other words, blocks 1412 through 1414 illustrated in Figure 14 correspond to means-plus-function blocks 1512 through 1514 illustrated in Figure 15.

The modules in Figures 9, 11, 13 and 15 may comprise processors, memories (e.g., one or more processors executing instructions stored in memory), electronic devices, hardware devices, electronic components, logical circuits, etc., or any combination thereof.

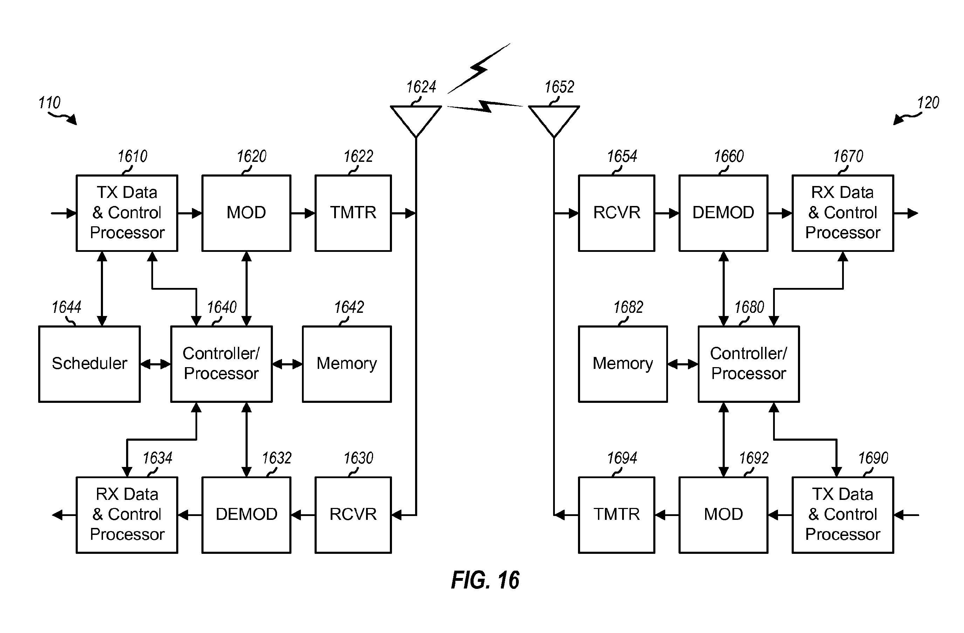

Figure 16 shows a block diagram of a design of a base station 110 and a subscriber station 120, which are one of the base stations 110 and one of the subscriber stations 120 in Figure 1. At the base station 110, a transmit (TX) data and control processor 1610 may receive traffic data from a data source (not shown) and/or control information from a controller/processor 1640. The processor 1610 may process (e.g., encode, interleave, and symbol map) the traffic data and control information and provide modulation symbols. A modulator (MOD) 1620 may process the modulation symbols (e.g., for OFDM, CDMA, etc.) and provide output chips. A transmitter (TMTR) 1622 may process (e.g., convert to analog, amplify, filter, and upconvert) the output chips and generate a downlink signal, which may be transmitted via an antenna 1624.

At the subscriber station 120, an antenna 1652 may receive the downlink signals from the base station 110 and other base stations and may provide a received signal to a receiver (RCVR) 1654. The Receiver 1654 may condition (e.g., filter, amplify, downconvert, and digitize) the received signal and provide received samples. A demodulator (DEMOD) 1660 may process the received samples (e.g., for OFDM, CDMA, etc.) and provide demodulated symbols. A receive (RX) data and control processor 1670 may process (e.g., symbol demap, deinterleave, and decode) the demodulated symbols to obtain decoded data and control information for the subscriber station 120.

On the uplink, at the subscriber station 120, traffic data and control information to be sent by the subscriber station 120 may be processed by a TX data and control processor 1690, modulated by a modulator 1692, conditioned by a transmitter 1694, and transmitted via an antenna 1652. At the base station 110, the uplink signals from the subscriber station 120 and possibly other subscriber stations may be received by an antenna 1624, conditioned by a receiver 1630, demodulated by a demodulator 1632, and processed by an RX data and control processor 1634 to recover the data and control information sent by the subscriber station 120. In general, the processing for uplink transmission may be similar to or different from the processing for downlink transmission.

Controllers/processors 1640 and 1680 may direct operation at the base station 110 and the subscriber station 120, respectively. Memories 1642 and 1682 may store data and program codes for the base station 110 and the subscriber station 120, respectively. A scheduler 1644 may schedule subscriber stations for downlink and/or uplink transmission and may provide assignments of system resources.

The processors 1610, 1640, 1634, 1670, 1680 and 1690 in Figure 16 may perform various functions for the techniques described herein. For example, the processors 1610, 1640, 1634 at the base station 110 may implement the method 800 in Figure 8, the method 1000 in Figure 10, the method 1400 in Figure 14, and/or other methods for the techniques described herein. The processors 1670, 1680 and 1690 at the subscriber station 120 may implement the method 1200 in Figure 12 and/or other methods for the techniques described herein.

In the above description, reference numbers have sometimes been used in connection with various terms. Where a term is used in connection with a reference number, this is meant to refer to a specific element that is shown in one or more of the Figures. Where a term is used without a reference number, this is meant to refer generally to the term without limitation to any particular Figure.

The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The phrase "based on" does not mean "based only on," unless expressly specified otherwise. In other words, the phrase "based on" describes both "based only on" and "based at least on."

The term "processor" should be interpreted broadly to encompass a general purpose processor, a central processing unit (CPU), a microprocessor, a digital signal processor (DSP), a controller, a microcontroller, a state machine, and so forth. Under some circumstances, a "processor" may refer to an application specific integrated circuit (ASIC), a programmable logic device (PLD), a field programmable gate array (FPGA), etc. The term "processor" may refer to a combination of processing devices, e.g., a combination of a DSP and a microprocessor, a plurality of microprocessors, one or more microprocessors in conjunction with a DSP core, or any other such configuration.

The term "memory" should be interpreted broadly to encompass any electronic component capable of storing electronic information. The term memory may refer to various types of processor-readable media such as random access memory (RAM), read-only memory (ROM), non-volatile random access memory (NVRAM), programmable read-only memory (PROM), erasable programmable read only memory (EPROM), electrically erasable PROM (EEPROM), flash memory, magnetic or optical data storage, registers, etc. Memory is said to be in electronic communication with a processor if the processor can read information from and/or write information to the memory. Memory that is integral to a processor is in electronic communication with the processor.

The terms "instructions" and "code" should be interpreted broadly to include any type of computer-readable statement(s). For example, the terms "instructions" and "code" may refer to one or more programs, routines, sub-routines, functions, procedures, etc. "Instructions" and "code" may comprise a single computer-readable statement or many computer-readable statements. The terms "instructions" and "code" may be used interchangeably herein.

The functions described herein may be implemented in hardware, software, firmware, or any combination thereof. If implemented in software, the functions may be stored as one or more instructions on a computer-readable medium. The term "computer-readable medium" refers to any available medium that can be accessed by a computer. By way of example, and not limitation, a computer-readable medium may comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Bluray^{®} disc where disks usually reproduce data magnetically, while discs reproduce data optically with lasers.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

The methods disclosed herein comprise one or more steps or actions for achieving the described method. The method steps and/or actions may be interchanged with one another without departing from the scope of the claims. In other words, unless a specific order of steps or actions is required for proper operation of the method that is being described, the order and/or use of specific steps and/or actions may be modified without departing from the scope of the claims.

Further, it should be appreciated that modules and/or other appropriate means for performing the methods and techniques described herein, such as those illustrated by Figures 8, 10, 12 and 14, can be downloaded and/or otherwise obtained by a device. For example, a device may be coupled to a server to facilitate the transfer of means for performing the methods described herein. Alternatively, various methods described herein can be provided via a storage means (e.g., random access memory (RAM), read only memory (ROM), a physical storage medium such as a compact disc (CD) or floppy disk, etc.), such that a device may obtain the various methods upon coupling or providing the storage means to the device. Moreover, any other suitable technique for providing the methods and techniques described herein to a device can be utilized.
It is to be understood that the claims are not limited to the precise configuration and components illustrated above. Various modifications, changes and variations may be made in the arrangement, operation and details of the systems, methods and apparatus described herein without departing from the scope of the claims.

### Further embodiments

A first embodiment of the present invention includes an apparatus for providing an efficient frame structure for wireless communication, comprising:
means for frequency division multiplexing, FDM first and second air interfaces in a downlink subframe of a frame; and
means for time division multiplexing, TDM the first and second air interfaces in an uplink subframe of the frame.

The means for frequency division multiplexing and means for time division multiplexing may comprise: at least one processor; and a memory coupled to the at least one processor. The at least one processor may be configured to frequency division multiplex the first and second air interfaces on first and second frequency bands, respectively, during the downlink subframe, and time division multiplex the first and second air interfaces in first and second time intervals respectively of the uplink subframe. The second frequency band may be twice the size of the first frequency band. The at least one processor may be configured to frequency division multiplex the first and second air interfaces on first and second frequency bands, respectively, during the downlink subframe, to time division multiplex the first and second air interfaces in first and second time intervals, respectively, of the uplink subframe, to utilize only the first frequency band for the first air interface during the first time interval of the uplink subframe, and to utilize the first and second frequency bands for the second air interface during the second time interval of the uplink subframe. The at least one processor may be configured to utilize frequency reuse of one for the downlink for the first and second air interfaces, to utilize frequency reuse greater than one for the uplink for the first air interface, and to utilize frequency reuse of one for the uplink for the second air interface. The first air interface may be IEEE 802.16e and the second air interface may be an IEEE 802.16 standard later than IEEE 802.16e. The frame may comprise the downlink subframe followed by the first time interval for IEEE 802.16e followed by the second time interval for IEEE 802.16m or the frame may comprise the downlink subframe followed by the second time interval for IEEE 802.16m followed by the first time interval for IEEE 802.16e.

A further embodiment of the present invention includes a method for providing an efficient frame structure for wireless communication, comprising; frequency division multiplexing, FDM, first and second air interfaces in a downlink subframe of a frame; and time division multiplexing, TDM the first and second air interfaces in an uplink subframe of the frame.

The frequency division multiplexing may comprise frequency division multiplexing the first and second air interfaces on first and second frequency bands, respectively, during the downlink subframe, and wherein the time division multiplexing may comprise time division multiplexing the first and second air interfaces in first and second time intervals, respectively, of the uplink subframe. The embodied method may further comprise: utilizing only the first frequency band for the first air interface during the first time interval of the uplink subframe; and utilizing the first and second frequency bands for tile second air interface during the second time interval of the uplink subframe. The method may further comprise utilizing frequency reuse of one for the downlink for the first and second air interfaces; utilizing frequency reuse greater than one for the uplink for the first air interface; and utilizing frequency reuse of one for the uplink for the second air interface.

The at least one processor described above in the preferred embodiment may be configured to send a second downlink transmission on a second frequency band in the downlink subframe, and to receive a second uplink transmission on the first and second frequency bands in a second time interval of the uplink subframe, the second downlink transmission and the second uplink transmission utilizing the second air interface. The first frequency band may be used by at least one adjacent sector for downlink transmission based on the second air interface during the downlink subframe.

The first frequency band may not be used by any adjacent sector for uplink transmission during the first time interval of the uplink sub frame. The second frequency band may be used by at least one adjacent sector for downlink transmission based on the first air interface during the downlink subframe. The first and second frequency bands may be used by at least one adjacent sector for uplink transmission based on the second air interface during the second time interval of the uplink subframe.

## Claims

1. A method for providing an efficient frame structure for wireless communication, comprising;
sending a first downlink transmission on a first frequency band in a downlink subframe; and
receiving a first uplink transmission on the first frequency band in a first time interval of an uplink subframe, the first downlink transmission and the first uplink transmission utilizing a first air interface, the first air interface being frequency division multiplexed, FDM with a second air interface on the downlink and time division multiplexed, TDM with the second air interface on the uplink.

2. The method of claim 1, further comprising:
sending a second downlink transmission on a second frequency band in the downlink subframe; and
receiving a second uplink transmission on the first and second frequency bands in a second time interval of the uplink subframe, the second downlink transmission and the second uplink transmission utilizing the second air interface.

3. An apparatus for providing an efficient frame structure for wireless communication, comprising:
means for sending a first downlink transmission on a first frequency band in a downlink subframe; and
means for receiving a first uplink transmission on the first frequency band in a first time interval of an uplink subframe, the first downlink transmission and the first uplink transmission utilizing a first air interface, the first air interface being frequency division multiplexed, FDM with a second air interface on the downlink and time division multiplexed, TDM with the second air interface on the uplink.

4. The apparatus of claim 3, further comprising:
means for sending a second downlink transmission on a second frequency band in the downlink subframe; and
means for receiving a second uplink transmission on the first and second frequency bands in a second time interval of the uplink subframe, the second downlink transmission and the second uplink transmission utilizing the second air interface.

5. The apparatus according to Claim 4 wherein the means for receiving and means for sending comprises:
at least one processor; and further comprising
a memory coupled to the at least one processor.

6. The apparatus of claim 5, wherein the at least one processor is configured to send the uplink transmission at a higher transmit power to account for the time division multiplexing of the first and second air interfaces on the uplink.

7. The apparatus of claim 5, wherein the first and second air interfaces are time division multiplexed in first and second time intervals, respectively, of the uplink subframe, and wherein the at least one processor is configured to boost transmit power of the uplink transmission by a factor determined based on duration of the uplink subframe and duration of the first time interval for the first air interface.

8. The apparatus of claim 5, wherein the first air interface is IEEE 802.16e.

9. The apparatus of claim 5, wherein the first air interface is an IEEE 802.16 standard later than IEEE 802.16e.

10. A method for providing an efficient frame structure for wireless communication, comprising:
receiving a downlink transmission on a first frequency band in a downlink subframe: and
sending an uplink transmission on the first frequency band in a first time interval of an uplink subframe, the downlink transmission and the uplink transmission utilizing a first air interface, the first air interface being frequency division multiplexed, FDM with a second air interface on the downlink and time division multiplexed, TDM with the second air interface on the uplink.

11. An apparatus for providing an efficient frame structure for wireless communication, comprising:
for receiving a downlink transmission on a first frequency band in a downlink subframe; and
means for sending an uplink transmission on the first frequency band in a first time interval of an uplink subframe, the downlink transmission and the uplink transmission utilizing a first air interface, the first air interface being frequency division multiplexed, FDM with a second air interface on the downlink and time division multiplexed, TDM with the second air interface on the uplink.

12. The apparatus according to Claim 11 wherein the means for sending and means for receiving comprises
at least one processorand further comprising:
a memory coupled to the at least one processor.

13. The apparatus of claim 12, the at least one processor is configured to send the downlink transmission for the first cell on a first frequency band during the downlink subframe, with the second cell operating on a second frequency band during the downlink subframe.

14. The apparatus of claim 12, wherein the at least one processor is configured to receive the uplink transmission for the first cell in a first time of the uplink subframe, with the second cell operating in a second time interval of the uplink sub frame.

15. The apparatus of claim 12, wherein the first and second cells are frequency division multiplexed on first and second frequency bands, respectively, during the downlink subframe, wherein the first and second cells are time division multiplexed in first and second time intervals, respectively, of the uplink subframe, wherein the first cell utilizes only the first frequency band during the first time interval of the uplink subframe, and wherein the second cell utilizes the first and second frequency bands during the second time interval of the uplink subframe.

16. The apparatus of claim 12, wherein the first cell is a macrocell and the second cell is a femtocell, or wherein the first cell is a femtocell and the second cell is a macrocell.

17. The apparatus of claim 12, wherein frequency reuse of one is used for the downlink for the first and second cells, frequency reuse greater than one is used for the uplink for the first cell, and frequency reuse of one is used for the uplink for the second cell.

18. A method for providing an efficient frame structure for wireless communication, comprising:
sending a downlink transmission for a first cell that is frequency division multiplexed, FDM with a second cell in a downlink subframe of a frame; and receiving an uplink transmission for the first cell that is time division multiplexed, TDM with the second cell in an uplink subframe of the frame.

19. The method of claim 18, wherein the sending the downlink transmission comprises sending the downlink transmission for the first cell on a first frequency band during the downlink subframe, with the second cell operating on a second frequency band during the downlink subframe, and wherein the receiving the uplink transmission comprises receiving the uplink transmission for the first cell in a first time interval of the uplink subframe, with the second cell operating in a second time interval of the uplink subframe.

20. The method of claim 18, further comprising:
utilizing only the first frequency band during the first time interval of the uplink subframe for the first cell, with the second cell utilizing the first and second frequency bands during the second time interval of the uplink subframe.

21. An apparatus for providing an efficient frame structure for wireless communication, comprising:
means for sending a downlink transmission for a first cell that is frequency division multiplexed, FDM, with a second cell in a downlink subframe of a frame; and
means for receiving an uplink transmission for the first cell that is time division multiplexed, TDM with the second cell in an uplink sub frame of the frame.

22. The apparatus of claim 21, wherein the means for sending the downlink transmission comprises means for sending the downlink transmission for the first cell on a first frequency band during the downlink subframe, with the second cell operating on a second frequency band during the downlink subframe, and wherein the means for receiving the uplink transmission comprises means for receiving the uplink transmission for the first cell in a first time interval of the uplink subframe, with the second cell operating in a second time interval of the uplink subframe.

23. The apparatus of claim 22, further comprising:
means for utilizing only the first frequency band during the first time interval of the uplink subframe for the first cell, with the second cell utilizing the first and second frequency bands during the second time interval of the uplink subframe.

24. A computer-program product comprising a computer-readable medium having instructions thereon, the instructions comprising code for causing at least one computer to implement the method of any of Claims 1 and 2, 10 and 18 to 20.
